(19) Europäisches Patentamt / European Patent Office / Office européen des brevets

(11) **EP 3 501 639 A1**

(12) **EUROPEAN PATENT APPLICATION**
published in accordance with Art. 153(4) EPC

(43) Date of publication:
**26.06.2019 Bulletin 2019/26**

(51) Int Cl.:
**B01J 23/62** *(2006.01)*  **B01D 53/94** *(2006.01)*
**B01J 35/10** *(2006.01)*  **F01N 3/10** *(2006.01)*
**F01N 3/28** *(2006.01)*

(21) Application number: **17841278.9**

(22) Date of filing: **16.06.2017**

(86) International application number:
**PCT/JP2017/022291**

(87) International publication number:
**WO 2018/034050 (22.02.2018 Gazette 2018/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **17.08.2016 JP 2016160055**

(71) Applicants:
• **Mitsui Mining & Smelting Co., Ltd.**
 **Shinagawa-ku**
 **Tokyo 141-8584 (JP)**
• **Tokyo Gas Co., Ltd.**
 **Tokyo 105-8527 (JP)**

(72) Inventors:
• **HAYASHI, Katsuhiko**
 **Ageo-shi**
 **Saitama 362-0021 (JP)**
• **ABE, Kazuyuki**
 **Ageo-shi**
 **Saitama 362-0021 (JP)**
• **NAKAHARA, Yunosuke**
 **Ageo-shi**
 **Saitama 362-0025 (JP)**
• **TABIRA, Yasunori**
 **Ageo-shi**
 **Saitama 362-0021 (JP)**
• **NAKANO, Tomoko**
 **Tokyo 105-8527 (JP)**
• **KANAZAWA, Kazuhiro**
 **Tokyo 105-8527 (JP)**
• **GOMI, Yasushiro**
 **Tokyo 105-8527 (JP)**

(74) Representative: **Novagraaf Technologies**
 **Bâtiment O2**
 **2, rue Sarah Bernhardt**
 **CS90017**
 **92665 Asnières-sur-Seine Cedex (FR)**

(54) **METHANE OXIDATION CATALYST**

(57) An improved methane oxidation catalyst including tin oxide-supported platinum exerts superior methane oxidation activity at lower temperatures. The methane oxidation catalyst for oxidizing methane in exhaust gas includes platinum supported on tin oxide, and satisfies formula (1): $y \leq 0.27\,x$, where x is a platinum content (wt%) relative to tin oxide, and y is a ratio of a peak intensity of (111)-faceted platinum relative to a peak intensity of (111)-faceted tin oxide ($Pt(111)/SnO_2(111)$), in a diffraction pattern ($2\theta = 37$ to $41°$) obtained by measurement with an X-ray diffractometer (XRD).

[FIG.3]

**Description**

Technical Field

The present invention relates to a methane oxidation catalyst for oxidizing unburned methane in exhaust gas.

Background Art

Diesel engines for, for example, electrical generators and ships currently use heavy oil as fuel. However, because of the need to preserve and improve the environment, full-scale studies on the use of $CH_4$ fuel as an alternative to heavy oil have started.

A typical internal-combustion engine that uses $CH_4$ fuel is a gaseous-fueled engine.

A gaseous-fueled engine is one of the engines used for cogeneration that generates electricity by burning gas, and utilizes the exhaust heat for thermal demands, such as cooling and heating or hot-water supply.

Gaseous-fueled engines are advantageous in that they emit less $CO_2$, and can run efficiently even on a low-calorific gas generated, for example, in a gasifying and melting furnace, as well as on natural gas or city gas. City gas is a gaseous fuel mainly containing natural gas, and typically contains 87 % by volume or more of methane.

However, gaseous-fueled engines have a problem in that 0.2% to 2% unburned methane is produced, that is, "methane slip" occurs. Methane ($CH_4$) has a global warming potential 25 times greater than $CO_2$, and unburned methane in exhaust gas needs to be removed through oxidation.

Thus, various oxidation catalysts for oxidizing residuals including such unburned methane have been developed.

For example, Patent Literature 1 (Japanese Unexamined Patent Application Publication No. 2000-254505) describes a catalyst in which palladium is supported on tin oxide. The catalyst is highly resistant to inhibition of its catalytic activity by sulfur oxide.

Patent Literature 2 (Japanese Unexamined Patent Application Publication No. 2004-351236) describes a catalyst for removing methane in combustion exhaust gas through oxidation at low temperatures. The catalyst is characterized by platinum being supported on porous tin oxide, and effectively removes methane in a sulfur oxide-containing combustion exhaust gas through oxidation in a low temperature range of 500 °C or below, particularly 450-350 °C for a long time without containing palladium which is considered to be a noble metal for oxidizing methane.

Patent Literature 3 (Japanese Unexamined Patent Application Publication 2006-272079) describes a catalyst having improved durability in which platinum is supported on tin oxide and on which iridium as a catalytic promoter is further supported for removing methane in a sulfur oxide-containing combustion exhaust gas through oxidation.

Related Art Documents

Patent Literature

Patent Literature 1: Japanese Unexamined Patent Application Publication 2000-254505
Patent Literature 2: Japanese Unexamined Patent Application Publication 2004-351236
Patent Literature 3: Japanese Unexamined Patent Application Publication 2006-272079

SUMMARY OF THE INVENTION

Problem to be Solved by the Invention

The present invention provides a novel methane oxidation catalyst as a further improved catalyst in which platinum is supported on tin oxide that exhibits superior methane oxidation activity at lower temperatures.

Means for Solving the Problem

The present invention provides a methane oxidation catalyst for oxidizing methane in exhaust gas, in which platinum is supported on tin oxide. The catalyst satisfies formula (1) below where x is a platinum content (wt%) relative to tin oxide, and y is a ratio of a peak intensity of (111)-faceted platinum relative to a peak intensity of (111)-faceted tin oxide (Pt (111)/$SnO_2$ (111)) in a diffraction pattern ($2\theta$ = 37 to 41°) obtained using an X-ray diffractometer (XRD).

$$\text{formula (1): } y \leq 0.27\ x$$

Advantageous Effect of Invention

The methane oxidation catalyst according to the present invention in which platinum is supported on tin oxide can exhibit superior methane oxidation activity at lower temperatures if the formula (1) above is satisfied.

Brief Description of Drawings

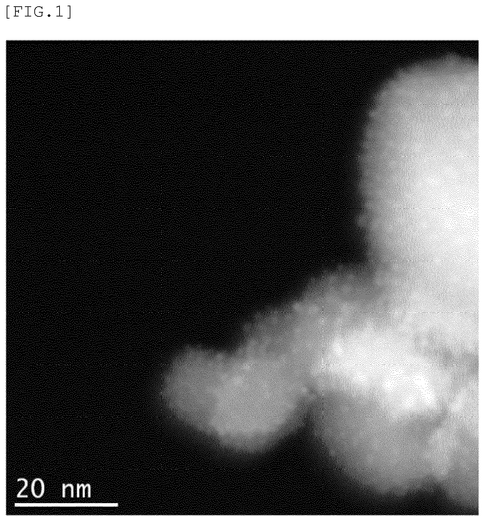

Fig. 1 is a TEM image of tin oxide powder on which Pt is supported according to Example 1-3.

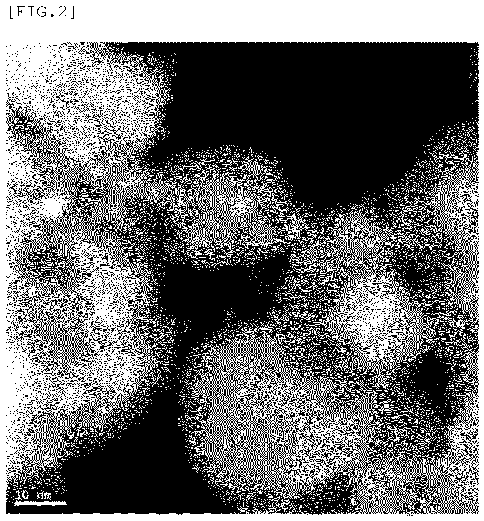

Fig. 2 is a TEM image of tin oxide powder on which Pt is supported according to Comparative Example 1-3.

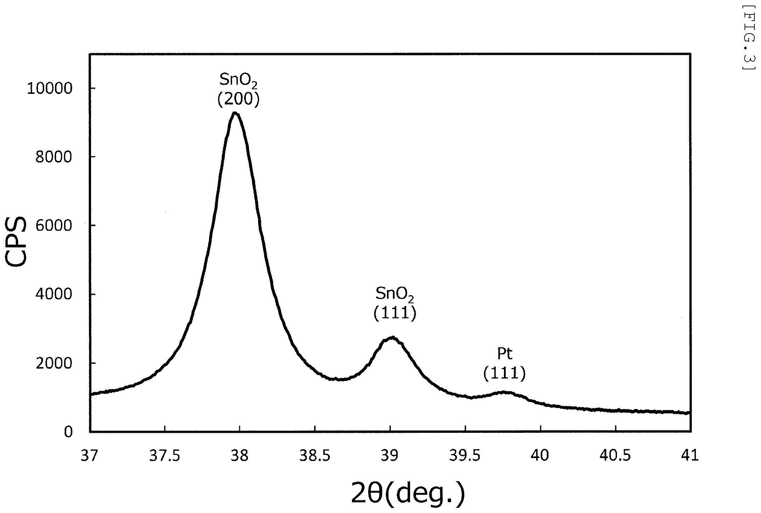

Fig. 3 is a diffraction pattern ($2\theta$ = 37 to 41°) of tin oxide powder on which Pt is supported according to Example 1-3 obtained using an X-ray diffractometer (XRD).

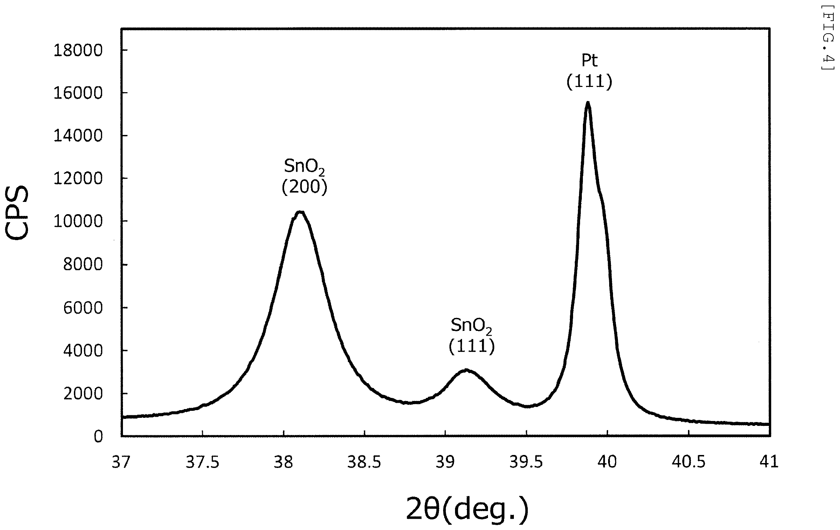

Fig. 4 is a diffraction pattern ($2\theta$ = 37 to 41°) of tin oxide powder on which Pt is supported according to Comparative Example 1-3 obtained using an X-ray diffractometer (XRD).

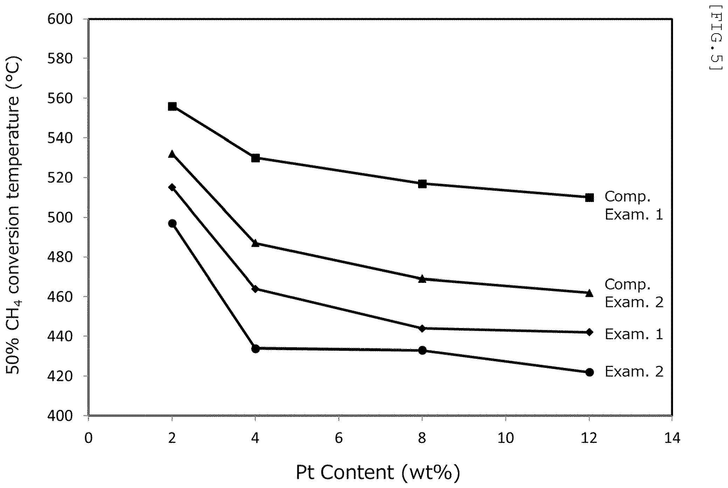

Fig. 5 is a graph showing the relationship between Pt content and 50% $CH_4$ conversion temperature (T50) for Examples and Comparative Examples.

Mode for Carrying Out the Invention

The present invention will now be described by means of embodiments. However, the present invention is not limited to the embodiments described below.

<Present Methane Oxidation Catalyst>

The methane oxidation catalyst according to one embodiment of the present invention (hereinafter referred to as "the present methane oxidation catalyst") is a methane oxidation catalyst in which platinum is supported on tin oxide and which has a catalytic activity of oxidizing methane in exhaust gas.
The present methane oxidation catalyst satisfies formula (1), where x is a platinum content (wt%) relative to tin oxide, and y is a ratio of a peak intensity of (111)-faceted platinum relative to a peak intensity of (111)-faceted tin oxide ($Pt(111)/SnO_2(111)$), in a diffraction pattern ($2\theta$ = 37 to 41°) obtained using an X-ray diffractometer (XRD).

$$\text{formula (1): } y \leq 0.27\ x$$

When formula (1) is satisfied, platinum, which has an extremely smaller particle diameter than tin oxide, is highly dispersed and supported on the surface of tin oxide, and thus superior methane oxidation activity can be exerted at lower temperatures.
The present methane oxidation catalyst preferably satisfies formula (2), where x is a platinum content (wt%) relative to tin oxide, and z is a ratio of a peak intensity of (111)-faceted platinum relative to a peak intensity of (200)-faceted tin oxide ($Pt (111)/SnO_2 (200)$), in a diffraction pattern ($2\theta$ = 37 to 41°) obtained using an X-ray diffractometer (XRD).

$$\text{formula (2): } z \leq 0.1\ x$$

When formula (2) is satisfied, platinum, which has an extremely smaller particle diameter than tin oxide, is highly dispersed and supported on the surface of tin oxide, and thus superior methane oxidation activity can be exerted at lower temperatures.
The present methane oxidation catalyst satisfying formula (1) or both formulas (1) and (2) is produced preferably by, as described later, dissolving dinitrodiamine-Pt in nitric acid to prepare a platinum solution having a pH of 2 or less, preferably 1 or less, heating the solution, and then adding tin oxide powder to the solution. A tin oxide having a high specific surface area is also preferably used. However, this manufacturing method is not limitative.
The present methane oxidation catalyst preferably has a volume cumulative particle diameter D50 (hereinafter referred to as "D50") measured using a laser diffraction particle size distribution measurement apparatus of 0.1 $\mu$m to

100 $\mu$m.

The present methane oxidation catalyst having a D50 of 0.1 $\mu$m or more has a higher strength when formed into a honeycomb or pellet structure, and the present methane oxidation catalyst having a D50 of 100 $\mu$m or less can allow the platinum particles to be uniformly dispersed and supported on the surface of tin oxide.

For these reasons, the present methane oxidation catalyst preferably has a D50 of 0.1 $\mu$m to 100 $\mu$m, and, within this range, more preferably 0.5 $\mu$m or more, or 50 $\mu$m or less, and still more preferably 1.0 $\mu$m or more or 20 $\mu$m or less.

The D50 of the present methane oxidation catalyst can be adjusted by, for example, optimizing drying and calcining conditions in the manufacturing process of the catalyst, or mechanically crushing tin oxide using, for example, a bead mill before or after platinum is supported on tin oxide. However, these methods are not limitative.

(Tin Oxide)

In the present methane oxidation catalyst, the tin oxide as a support preferably has a specific surface area, after calcining, of 10 to 100 m$^2$/g.

Tin oxide having a specific surface area of 10 m$^2$/g or more and 100 m$^2$/g or less can allow platinum particles to be uniformly dispersed on its surface.

For this reason, the tin oxide has a specific surface area of preferably 10 to 100 m$^2$/g, and, within this range, more preferably 20 m$^2$/g or more, or 90 m$^2$/g or less, and still more preferably 35 m$^2$/g or more, or 60 m$^2$/g or less.

The specific surface area of tin oxide can be adjusted by, for example, optimizing synthesis, drying, and calcining conditions in the manufacturing process of tin oxide, or mechanically crushing tin oxide using, for example, a bead mill. However, these methods are not limitative.

To reduce sintering of tin oxide to reduce a decrease in its specific surface area after calcining, various elements can be solid-solubilized in tin oxide, or the surface of tin oxide can be covered with a compound of such elements. Examples of such elements include Si, Al, Zr, Ce, La, Fe, Mn, Ni, Co, Cu, W, Mo, V, Ca, Ba, Mg, Pd, Rh, and Ru.

The present methane oxidation catalyst preferably includes tin oxide with a crystallite diameter of 5 nm to 100 nm.

Tin oxide with a crystallite diameter of 5 nm to 100 nm can allow platinum particles to be uniformly dispersed and supported on the surface of tin oxide, and thus can allow the supported platinum to be present on the surface of the tin oxide in a highly dispersed manner.

For this reason, the tin oxide has a crystallite diameter of preferably 5 nm to 100 nm, and, within this range, more preferably 10 nm or more, or 50 nm or less, and still more preferably 12 nm or more, or 35 nm or less.

The crystallite diameter of tin oxide can be adjusted by, for example, optimizing synthesis, drying, and calcining conditions in the manufacturing process of tin oxide, or mechanically crushing tin oxide using, for example, a bead mill. However, these methods are not limitative.

(Platinum)

The present methane oxidation catalyst preferably has a y of 1.0 or less where y is a ratio of a peak intensity of (111)-faceted platinum relative to a peak intensity of (111)-faceted tin oxide (Pt(111)/SnO$_2$(111)) in a diffraction pattern ($2\theta$ = 37 to 41°) obtained using an X-ray diffractometer (XRD). This also includes the case where y is zero, in other words, no peak of platinum appears in the diffraction pattern of the methane oxidation catalyst although platinum is contained.

Above mentioned y being 1.0 or less indicates that platinum in the form of very fine particulates is highly dispersed and supported on the surface of tin oxide. Thus, the platinum has many active sites, and can exert superior methane oxidation activity at lower temperatures.

For this reason, y is preferably 1.0 or less, and, within this range, more preferably 0.1 or more, or 0.6 or less.

The present methane oxidation catalyst preferably has a z of 1.0 or less where z is a ratio of a peak intensity of (111)-faceted platinum relative to a peak intensity of (200)-faceted tin oxide (Pt (111)/SnO$_2$ (200)) in a diffraction pattern ($2\theta$ = 37 to 41°) obtained using an X-ray diffractometer (XRD). This also includes the case where z is zero, in other words, no peak of platinum appears in the diffraction pattern of the methane oxidation catalyst although platinum is contained.

For this reason, z is preferably 1.0 or less, and, within this range, more preferably 0.05 or more, or 0.3 or less.

The present methane oxidation catalyst in which y is 1.0 or less, or z is 1.0 or less is preferably produced by, as described later, dissolving dinitrodiamine-Pt in nitric acid to prepare a platinum solution with a pH of 2 or less, preferably 1 or less, heating the solution, and then adding tin oxide to the solution. However, this manufacturing method is not limitative.

In the present methane oxidation catalyst, the amount of platinum oxide is preferably 45 atom % or less of all the platinum supported on tin oxide. This means non-oxide platinum with superior oxidation activity is contained in a greater amount, resulting in higher methane oxidation performance. The non-oxide platinum as used herein means metal platinum or Pt-Sn alloy, or both.

In the present methane oxidation catalyst, the amount of platinum oxide is thus preferably 45 atom % or less, more preferably 40 atom % or less, and still more preferably 25 atom % or less of all the platinum supported on tin oxide.

The present methane oxidation catalyst preferably contains platinum which is supported on tin oxide with a particle diameter, or an average primary particle diameter, of 0.5 nm to 2.5 nm, which is measured by observation using a transmission electron microscope (TEM).

Platinum with a particle diameter of 0.5 nm to 2.5 nm can be highly dispersed on tin oxide.

For this reason, platinum which is supported on tin oxide has a particle diameter of preferably 0.5 nm to 2.5 nm, and, within this range, more preferably 0.5 nm or more, or 2.0 nm or less, and still more preferably 0.7 nm or more, or 1.5 nm or less.

The particle diameter of platinum can be adjusted by, for example, adjusting the types of platinum salts, or platinum support conditions including the temperature, pH, and concentration of the platinum solution to be used. However, this method is not limitative.

The present methane oxidation catalyst preferably contains no coarse platinum particles for efficiently improving methane oxidation activity. Thus, platinum preferably has a maximum particle diameter of 50 nm or less.

The maximum particle diameter of the present methane oxidation catalyst can be adjusted by, for example, optimizing the type of platinum solution salts, or platinum support conditions including the temperature and pH of the platinum solution to be used. However, this method is not limitative.

The present methane oxidation catalyst preferably has a platinum content of 0.5 to 35 wt% relative to tin oxide.

A platinum content of 0.5 wt% or more relative to tin oxide enables methane to be efficiently oxidized, and 35 wt% or less can reduce coarsening of platinum particles.

For these reasons, the platinum content relative to tin oxide is preferably 0.5 to 35 wt%, and, within this range, more preferably 1 wt% or more, or 20 wt% or less, and still more preferably 3 wt% or more, or 15 wt% or less.

The platinum content (wt%) can be measured by the method of: dissolving the present methane oxidation catalyst by an appropriate method to prepare a solution, subjecting the solution to ICP emission spectrometry to measure Pt ion concentration A (wt%) and Sn ion concentration B (wt%), and using the values of A and B and the formula below to calculate the platinum content relative to tin oxide (wt%).

$$\text{Formula: platinum content } (x) = [A/\{B \times (\text{molecular weight of } SnO_2/\text{atomic weight of } Sn)\}] \times 100$$

(Manufacturing Method)

The present methane oxidation catalyst may be produced by, for example, the method of adding tin oxide powder ($SnO_2$ powder) to a platinum solution (Pt solution) to allow the $SnO_2$ particles to support Pt, followed by drying and calcining. More specifically, dinitrodiamine-Pt is dissolved in nitric acid to prepare a platinum solution with a pH of 2 or less, preferably 1 or less, the solution is then heated to a temperature of 50 °C to 80 °C, to the solution, tin oxide powder is then added to allow the tin oxide particles to support platinum, followed by evaporation to dryness, drying, and calcining to obtain the present methane oxidation catalyst. This manufacturing method enables tin oxide to support ultrafine platinum particles in a uniformly dispersed manner as the present methane oxidation catalyst, because, the present inventors consider, heating a platinum solution after its preparation to 50 °C to 80 °C allows the platinum complexes in the solution to appropriately aggregate, and the appropriately aggregated platinum complexes adhere to the surfaces of tin oxide particles charged into the solution in a manner appropriately spaced apart from one another.

(Forms of Catalyst)

The present methane oxidation catalyst may be used in the form of, for example, powder, grains, or granules (including spherical shapes). However, these forms are not limitative.

The present methane oxidation catalyst is formed into, for example, a powdery methane oxidation catalyst. The powdery methane oxidation catalyst can be further formed into pellet (cylindrical or ring-shaped), tablet, honeycomb (monolith structure) or plate (layered) shaped compacts, or methane oxidation catalyst compacts. These compacts can be further laminated on a substrate formed from ceramics or a metal material.

The substrate may be formed from a heat resistant material such as ceramics, or a metal material.

The ceramic substrate may be formed from a fire-resistant ceramic material, examples of which include cordierite, cordierite-alpha alumina, silicon-nitride, zircon-mullite, alumina-silica magnesia, zircon-silicate, sillimanite, magnesium silicate, zircon, petalite, alpha alumina, and aluminosilicates.

The metal substrate may be formed from a heat resistant metal, examples of which include stainless steel and other appropriate iron-based heat resistant alloys.

The substrate may have a honeycomb, pellet, or spherical shape.

The honeycomb-shaped substrate may be formed from a cordierite material, such as ceramics, or a metal material, such as ferritic stainless steel.

It has been found that the present methane oxidation catalyst supported on a honeycomb substrate can exert methane oxidation activity at further lower temperatures.

The catalyst of this structure can be formed, for example, by mixing and stirring the present methane oxidation catalyst, a binder as appropriate, and water to prepare slurry, applying the slurry onto a substrate, such as a ceramic honeycomb structure, and calcining them to allow a layer of the present catalyst to be formed on a surface of the substrate.

The catalyst of this structure may be manufactured in any known method, and is not limited to the method described above.

The catalyst layer may be a single layer or may consist of multiple layers regardless of the manufacturing methods.

(Characteristics of Present Methane Oxidation Catalyst)

The present methane oxidation catalyst has superior methane oxidation activity, and thus can maintain about the same low-temperature activity with less Pt content than conventional methane oxidation catalysts.

(Definition of Terms and Phrases)

As used herein, the phrase "C to D", where C and D denote any numbers, includes "preferably greater than C" or "preferably less than D" as well as "C or more and D or less" unless otherwise noted.

"C or more", where C denotes any number, or "D or less" where D denotes any number, includes "preferably greater than C" or "preferably less than D".

EXAMPLES

The present invention will now be further described in detail with reference to Examples and Comparative Examples below.

<Comparative Examples 1-1 to 1-4>

Dinitrodiamine-Pt was dissolved in ammonia water to prepare a Pt solution with a pH of 10, and the solution was heated to 60 °C. To the Pt solution, tin oxide powder with a predetermined concentration (D50 = 44 $\mu$m, BET = 14 $m^2$/g) was added to allow the $SnO_2$ particles to support Pt. The solution was then heated to evaporate to dryness, further dried with a large hot-air dryer, calcined at 550 °C for 3 hours in the atmospheric environment, and crushed in a mortar to obtain tin oxide powder on which Pt is supported (sample).

In the preparation of a Pt solution above, the Pt content was varied to obtain Pt solutions having a Pt (platinum) content relative to $SnO_2$ of 2 wt% (Comparative Example 1-1), 4 wt% (Comparative Example 1-2), 8 wt% (Comparative Example 1-3), and 12 wt% (Comparative Example 1-4).

<Comparative Examples 2-1 to 2-4>

Dinitrodiamine-Pt was dissolved in ammonia water to prepare a Pt solution with a pH of 10, and the solution was heated to 60 °C. To the Pt solution, tin oxide powder with a predetermined concentration (D50 = 1.2 $\mu$m, BET = 39 $m^2$/g) was added to allow the $SnO_2$ particles to support Pt. The solution was then heated to evaporate to dryness, further dried with a large hot-air dryer, calcined at 550 °C for 3 hours in the atmospheric environment, and crushed in a mortar to obtain tin oxide powder on which Pt is supported (sample).

In the preparation of a Pt solution above, the Pt content was varied to obtain Pt solutions having a Pt (platinum) content relative to $SnO_2$ of 2 wt% (Comparative Example 2-1), 4 wt% (Comparative Example 2-2), 8 wt% (Comparative Example 2-3), and 12 wt% (Comparative Example 2-4).

<Examples 1-1 to 1-4>

Dinitrodiamine-Pt was dissolved in nitric acid to prepare a Pt solution with a pH of 1 or less, and the solution was then heated to 60 °C. To the Pt solution, tin oxide powder with a predetermined concentration (D50 = 44 $\mu$m, BET = 14 m$^2$/g) was added to allow the $SnO_2$ particles to support Pt. The solution was then heated to evaporate to dryness, further dried with a large hot-air dryer, calcined at 550 °C for 3 hours in the atmospheric environment, and crushed in a mortar to obtain tin oxide powder on which Pt is supported (sample).

In the preparation of a Pt solution above, the Pt content was varied to obtain Pt solutions having a Pt (platinum) content relative to $SnO_2$ of 2 wt% (Example 1-1), 4 wt% (Example 1-2), 8 wt% (Example 1-3), and 12 wt% (Example 1-4).

<Examples 2-1 to 2-4>

Dinitrodiamine-Pt was dissolved in nitric acid to prepare a Pt solution with a pH of 1 or less, and the solution was then heated to 60 °C. To the Pt solution, tin oxide powder with a predetermined concentration (D50 = 1.2 $\mu$m, BET = 39 m$^2$/g) was added to allow the $SnO_2$ particles to support Pt. The solution was then heated to evaporate to dryness, further dried with a large hot-air dryer, calcined at 550 °C for 3 hours in the atmospheric environment, and crushed in a mortar to obtain tin oxide powder on which Pt is supported (sample).

In the preparation of a Pt solution above, the Pt content was varied to obtain Pt solutions having a Pt (platinum) content relative to $SnO_2$ of 2 wt% (Example 2-1), 4 wt% (Example 2-2), 8 wt% (Example 2-3), and 12 wt% (Example 2-4).

(Crystallite Diameter of Tin Oxide-Supported Pt)

The crystallite diameters of tin oxide (host material) in the tin oxide powders on which Pt is supported obtained in Examples and Comparative Examples were each measured by the Rietveld method as described below.

An X-ray diffractometer using Cu-K$\alpha$ radiation (RINT-TTRIII manufactured by Rigaku) was used, and analysis was carried out using MDI Jade 7 software for analysis (manufactured by Materials Date) .

=XRD Measurement Conditions=

X-ray source: CuK$\alpha$, Operational axis: $2\theta/\theta$, Measurement method: sequential, Counting unit: cps
Start angle: 5°, End angle: 80°,
Sampling width: 0.02°, Scan speed: 20°/min,
Voltage: 50 kV, Current: 300 mA
Divergence slit: 2/3°, Vertical divergence: 10 mm
Scattering slit: 2/3°, Receiving slit: 0.15 mm

(Platinum Particle Diameters Determined by Observation of Transmission Electron Microscope (TEM) Images)

The tin oxide powders on which Pt is supported obtained in Examples and Comparative Examples were observed using a transmission electron microscope (H-9000UHR manufactured by Hitachi) at an acceleration voltage of 200 kV and at 50000 x magnification. Primary particles of the platinum in each image were counted for 200 of them using Feret's diameter, and their average diameter was calculated as a platinum particle diameter (TEM diameter) of each sample.

(Platinum Oxide Ratio)

The tin oxide powders on which Pt is supported obtained in Examples and Comparative Examples were subjected to X-ray photoelectron spectroscopy (XPS) surface analysis using an X-ray photoelectron spectrometer (VersaProve II manufactured by ULVAC-PHI) to measure a rate of Pt metal: $R_{Pt-metal}$ (atom %) and a rate of Pt oxide: $R_{Pt-oxide}$ (atom %). Using these values and the formula below, the rate of platinum oxide (atom %) for each sample was calculated. The X-ray source was Al radiation (1486. 6 eV) .

$$\text{Formula: platinum oxide rate} = \{R_{Pt-oxide}/(R_{Pt-metal} + R_{Pt-oxide})\} \times 100$$

As used herein, the rate of platinum oxide in platinum which is supported on tin oxide is the rate of platinum oxide defined by formula above in the analysis area on the surface and its neighborhood of a methane oxidation catalyst measured by X-ray photoelectron spectroscopy.

(Peak Intensity Ratio)

The tin oxide powders on which Pt is supported obtained in Examples and Comparative Examples were subjected to an apparatus RINT-TTRIII manufactured by Rigaku to measure their diffraction patterns under the conditions described below, and their respective peak intensity ratios were obtained based on the diffraction patterns.

=XRD Measurement Conditions=

X-ray source: $CuK\alpha$, Operational axis: $2\theta/\theta$, Measurement method: sequential, Counting unit: cps
Start angle: 37°, End angle: 41°,
Sampling width: 0.01°, Scan speed: 0.1°/min,
Voltage: 50 kV, Current: 300 mA
Divergence slit: 2/3°, Vertical divergence: 10 mm
Scattering slit: 2/3°, Receiving slit: 0.15 mm

In Table 1 below, in the diffraction pattern ($2\theta$ = 37 to 41°), samples satisfying formula (1): $y \leq 0.27\,x$, where x is a platinum content (wt%) relative to tin oxide, and y is a ratio of a peak intensity of (111)-faceted platinum relative to a peak intensity of (111)-faceted tin oxide ($Pt(111)/SnO_2(111)$), were indicated with a "○", and samples failing to satisfy formula (1) were indicated with a "×".
In the diffraction pattern ($2\theta$ = 37 to 41°), samples satisfying formula (2): $z \leq 0.1\,x$, where x is a platinum content (wt%) relative to tin oxide, and z is a ratio of a peak intensity of (111)-faceted platinum relative to the peak intensity of (200)-faceted tin oxide ($Pt(111)/SnO_2(200)$), were indicated with a "○", and samples failing to satisfy formula (1) were indicated with a "×".

<Measurement of 50% $CH_4$ Conversion Temperature (T50)>

The tin oxide powders on which Pt is supported obtained in Examples and Comparative Examples were granulated to catalytic particles with a particle size of 0.35 mm to 0.6 mm. 0.05 g of the respective catalytic particles were then filled into a quartz reactor with a $\phi$ 10 mm. To each reactor, a model gas (inlet gas) with the composition: $CH_4$: 0.2%, $O_2$: 10%, $CO_2$: 4.9%, $H_2O$: 10%, $N_2$ Balance: 75% was supplied at a space velocity (SV) of 150000 h$^{-1}$, and the $CH_4$ concentration of the gas passed through the catalytic particles (outlet gas) was measured using a hydrogen flame ionization detector while the temperature was raised to 600 °C at a rate of 10 °C /min. The difference in $CH_4$ concentration between the inlet gas and the outlet gas was used to calculate the conversion rate. $T_{50}$ is the temperature at which the conversion rate reaches 50%.

[Table 1]

| | Crystallite diameter of tin oxide supporting Pt (nm) | Particle diameter of Pt (nm) | Ratie of Pt oxide (atom%) | Pt content (wt%) | Pt(111)/SnO$_2$(111) | Pt(111)/SnO$_2$(200) | Formula (1) y≦0.27x | | Formula (2) z≦0.1x | | 50% CH4 conversion Temp. (T50) |
|---|---|---|---|---|---|---|---|---|---|---|---|
| | | | | x | y | z | y-0.27x | Formula (1) | z-0.1x | Formula (2) | °C |
| Comp. Ex 1-1 | 30 | 3.2 | 52 | 2 | 1.71 | 0.47 | 1.17 | × | 0.27 | × | 556 |
| Comp. Ex 1-2 | | | | 4 | 4.05 | 1.17 | 2.97 | × | 0.77 | × | 519 |
| Comp. Ex 1-3 | | | | 8 | 5.10 | 1.49 | 2.94 | × | 0.69 | × | 517 |
| Comp. Ex 1-4 | | | | 12 | 6.01 | 1.80 | 2.77 | × | 0.60 | × | 510 |
| Comp. Ex 2-1 | 15 | 2.6 | 38 | 2 | 0.81 | 0.33 | 0.27 | × | 0.13 | × | 532 |
| Comp. Ex 2-2 | | | | 4 | 1.77 | 0.74 | 0.69 | × | 0.34 | × | 487 |
| Comp. Ex 2-3 | | | | 8 | 7.18 | 3.12 | 5.02 | × | 2.32 | × | 469 |
| Comp. Ex 2-4 | | | | 12 | 3.43 | 1.62 | 0.19 | × | 0.42 | × | 462 |
| Example 1-1 | 30 | 1.7 | 52 | 2 | 0.24 | 0.06 | -0.30 | ○ | -0.14 | ○ | 515 |
| Example 1-2 | | | | 4 | 0.24 | 0.07 | -0.84 | ○ | -0.33 | ○ | 464 |
| Example 1-3 | | | | 8 | 0.41 | 0.12 | -1.75 | ○ | -0.68 | ○ | 444 |
| Example 1-4 | | | | 12 | 2.68 | 0.81 | -0.56 | ○ | -0.39 | ○ | 442 |
| Example2-1 | 15 | 1.1 | 21 | 2 | 0.45 | 0.18 | -0.09 | ○ | -0.02 | ○ | 497 |
| Example2-2 | | | | 4 | 0.44 | 0.18 | -0.64 | ○ | -0.22 | ○ | 434 |
| Example2-3 | | | | 8 | 0.51 | 0.22 | -1.65 | ○ | -0.58 | ○ | 433 |
| Example2-4 | | | | 12 | 0.55 | 0.24 | -2.69 | ○ | -0.96 | ○ | 422 |

EP 3 501 639 A1

9

Examples above and the results of experiments carried out so far by the present inventors revealed that in the diffraction patterns of methane oxidation catalysts in which platinum is supported on tin oxide, the methane oxidation catalysts of Examples satisfying formula (1): $y \leq 0.27\ x$, where x is a platinum content (wt%) relative to tin oxide, and y is a ratio of a peak intensity of (111)-faceted platinum relative to a peak intensity of (111)-faceted tin oxide $(Pt(111)/SnO_2(111))$, showed a superior methane oxidation activity at lower temperatures than Comparative Examples with the same platinum content. Thus, the methane oxidation catalysts of Examples with even less Pt content can exert a methane oxidation activity greater than or equal to Comparative Examples.

This is seemingly because platinum with a very smaller particle diameter than tin oxide is highly dispersed and supported on the surfaces of the tin oxide particles.

**Claims**

1. A methane oxidation catalyst for oxidizing methane in exhaust gas having a structure in which platinum is supported on tin oxide, wherein formula (1) is satisfied in a diffraction pattern ($2\theta$ = 37 to 41°) obtained using an X-ray diffractometer (XRD).

$$\text{formula (1): } y \leq 0.27\ x$$

where x is a platinum content (wt%) relative to tin oxide, and y is a ratio of a peak intensity of (111)-faceted platinum relative to a peak intensity of (111)-faceted tin oxide $(Pt(111)/SnO_2(111))$.

2. The methane oxidation catalyst according to claim 1, having a platinum content relative to tin oxide of 0.5 to 35 wt%.

3. The methane oxidation catalyst according to claim 1 or 2, wherein y in the formula (1) is 1.0 or less.

4. The methane oxidation catalyst according to any one of claims 1 to 3, wherein Pt oxide accounts for 45 atom % or less of the platinum supported on tin oxide.

5. The methane oxidation catalyst according to any one of claims 1 to 4, wherein the platinum which is supported on tin oxide has a particle diameter determined by observation with a transmission electron microscope (TEM) of 0.5 nm to 2.5 nm.

6. The methane oxidation catalyst according to any one of claims 1 to 5, wherein the tin oxide has a specific surface area of 10 to 100 $m^2$/g.

7. A methane oxidation catalyst molded product obtained by molding the methane oxidation catalyst according to any one of claims 1 to 6.

8. A methane oxidation catalyst structure, comprising the methane oxidation catalyst molded product according to claim 7 and a substrate.

[FIG.1]

[FIG.2]

10 nm

[FIG.3]

[FIG.4]

[FIG.5]

## INTERNATIONAL SEARCH REPORT

| | International application No. |
|---|---|
| | PCT/JP2017/022291 |

| A. CLASSIFICATION OF SUBJECT MATTER |
|---|
| *B01J23/62*(2006.01)i, *B01D53/94*(2006.01)i, *B01J35/10*(2006.01)i, *F01N3/10* (2006.01)i, *F01N3/28*(2006.01)i |

According to International Patent Classification (IPC) or to both national classification and IPC

| B. FIELDS SEARCHED |
|---|
| Minimum documentation searched (classification system followed by classification symbols) |
| B01J23/62, B01D53/94, B01J35/10, F01N3/10, F01N3/28 |

Documentation searched other than minimum documentation to the extent that such documents are included in the fields searched

| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
JSTPlus(JDreamIII), JST7580(JDreamIII), JSTChina(JDreamIII)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y<br>A | Ryuji KIKUCHI et al., "Effect of redox treatment on nano-scopic modification of Pt/SnO_2 interface and the catalytic activity for CH_4 and CO oxidation", Catalyst, 2007, vol.49, no.6, pages 459 to 461 | 1-3,7-8<br>6<br>4-5 |
| Y | JP 2004-351236 A (Tokyo Gas Co., Ltd.), 16 December 2004 (16.12.2004), claims; paragraph [0034]; fig. 5 (Family: none) | 6 |
| Y | WO 2014/073995 A1 (UNIWERSYTET JAGIELLONSKI), 15 May 2014 (15.05.2014), example 1 (Family: none) | 6 |

| ☒ | Further documents are listed in the continuation of Box C. | ☐ | See patent family annex. |
|---|---|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 September 2017 (05.09.17) | 19 September 2017 (19.09.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

| International application No. |
|---|
| PCT/JP2017/022291 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 55-88848 A  (Tanaka Kikinzoku Kogyo Kabushiki Kaisha), 04 July 1980 (04.07.1980), (Family: none) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000254505 A
- JP 2004351236 A
- JP 2006272079 A